# EUROPEAN PATENT SPECIFICATION

(11) **EP 0 498 730 B1**
(45) Date of publication and mention of the grant of the patent: **15.10.1997**
(21) Application number: 92400308.0
(22) Date of filing: 06.02.1992
(51) Int. Cl.: H04N 5/232, H04N 5/14

(54) **Video signal processing apparatus for compensating camera shake**
Videosignalverarbeitungsgerät zur Kompensation des Kamerawackelns
Appareil de traitement de signal vidéo pour la compensation de tremblement de caméra

(30) Priority: 06.02.1991 JP 36727/91
(43) Date of publication of application: 12.08.1992
(73) Proprietor: SONY CORPORATION, Tokyo (JP)
(72) Inventor: Kondo, Tetsujiro, Shinagawa-ku, Tokyo (JP)
(74) Representative: Thévenet, Jean-Bruno

(56) References cited:
- EP-A- 0 332 169
- EP-A- 0 348 207
- EP-A- 0 389 192
- EP-A- 0 393 823
- US-A- 4 959 725

## Description

### BACKGROUND OF THE INVENTION

### Field of the Invention

The invention relates to a video signal processing apparatus applicable to a hand-caused vibration correcting device for video data such as an output taken by a handy type video camera.

### Description of the Prior Art

When a picture is taken using a handy type video camera, there is a problem that a reproduced picture vibrates due to hand-caused vibration. To solve this problem, a technique where a moving vector is detected and video data stored in a picture memory is then corrected based on the moving vector has been proposed (for example, Patent Disclosure JP-A-63166370). The detection of the moving vector is made with block matching, for instance. Namely, a picture is divided into many areas (called "blocks"), an absolute value of a frame difference between a representative point of a previous frame lying at a central portion of each block and picture element data within a block of the present frame is calculated, an absolute value of a frame difference is accumulated with respect to one picture, the moving vector is detected from the position of a minimum value of accumulated frame difference data. Also, as described in this publication, picture enlargement is done to the extent of 15 %, for example, by read-out control of the picture memory and an interpolation circuit to prevent video data from being dropped when moving correction is made. For such a hand-caused vibration correcting device, accurate detection of the hand-caused vibration is required.

Enlargement of a picture is executed by the processing for delaying the read-out speed of a picture memory as compared with its write-in speed and for interpolating deficient picture element data. The picture enlargement consequently causes deterioration such as blur as compared with its original picture.

EP-A-0 332 169 describes an image shake detecting device incorporated in a video camera. The image signal is analysed using an edge detector in order to determine whether there is a large number of edges in the central portion of the image or at the periphery thereof. If there is a large number of edges in one of the two areas (e.g. periphery) then the video signal corresponding to that area is processed in order to detect a motion vector indicative of camera shake. The detected motion vector is used to drive an optical element in the image sensing portion of the camera.

### OBJECTS AND SUMMARY OF THE INVENTION

It is, therefore, an object of the invention to provide a hand-caused vibration correcting device for video data which has no need of the processing for enlargement of a picture for a hand-caused vibration correcting and which is capable of preventing the deterioration of picture quality.

According to an aspect of the present invention, there is provided a video signal processing apparatus for processing a video signal generated by an image sensing device in a video camera, comprising:
delay means for delaying said video signal;
means operative on the video signal for generating a motion vector signal representing a motion amount and motion direction between consecutive frames of the video signal;
means for judging whether the motion vector could represent an undesired hand-caused vibration which has displaced the image sensing means relative to a previous position thereof in which a first effective picture area was imaged; and
correcting means for performing a correction operation in accordance with the magnitude and direction of the motion vector when the motion vector is judged to represent an undesired hand-caused vibration; characterised in that the correcting means is adapted to perform said correction operation on the video signal whereby to correct said video signal in accordance with the magnitude and direction of the motion vector when the motion vector is judged to represent an undesired hand-caused vibration; memory means is provided for storing portions of the corrected video signal which correspond to the periphery of said first effective picture area; and the correcting means comprises selecting means responsive to the result of the judgement made by the judging means for outputting said corrected video signal corresponding to said first effective picture area by selectively outputting either the video signal held in the delay means and delayed in dependence upon said motion vector or corrected video signal portions stored in the memory means; wherein the selecting means is adapted, in the case where one or more regions of the periphery of said first effective picture area have been dropped from the video signal due to the motion and the motion vector is judged to represent undesired hand-caused vibration, to select for output the or those portions of the corrected video signal stored in the memory means which correspond to said one or more regions of the periphery of the first effective picture area.

The above, and other, objects, features and advantages of the present invention will become readily apparent from the following detailed description thereof which is to be read in connection with the accompanying drawings.

### BRIEF DESCRIPTION OF THE DRAWINGS

Fig. 1 is a block diagram of one embodiment of this invention;
Fig. 2 is a schematic diagram showing block division of one embodiment of this invention;
Fig. 3 is a schematic diagram showing a search range of a moving vector of one embodiment of this invention;
Fig. 4 is a schematic diagram used for explaining the formation of a frequency distribution table of one embodiment of this invention;
Fig. 5 is a schematic diagram used for the explanation of correction for hand-caused vibration of one embodiment of this invention; and
Fig. 6 is a schematic diagram for explaining the display of the hand-caused vibration appearing on a screen of a view finder of a video camera.

### DETAILED DESCRIPTION OF THE PREFERRED EMBODIMENTS

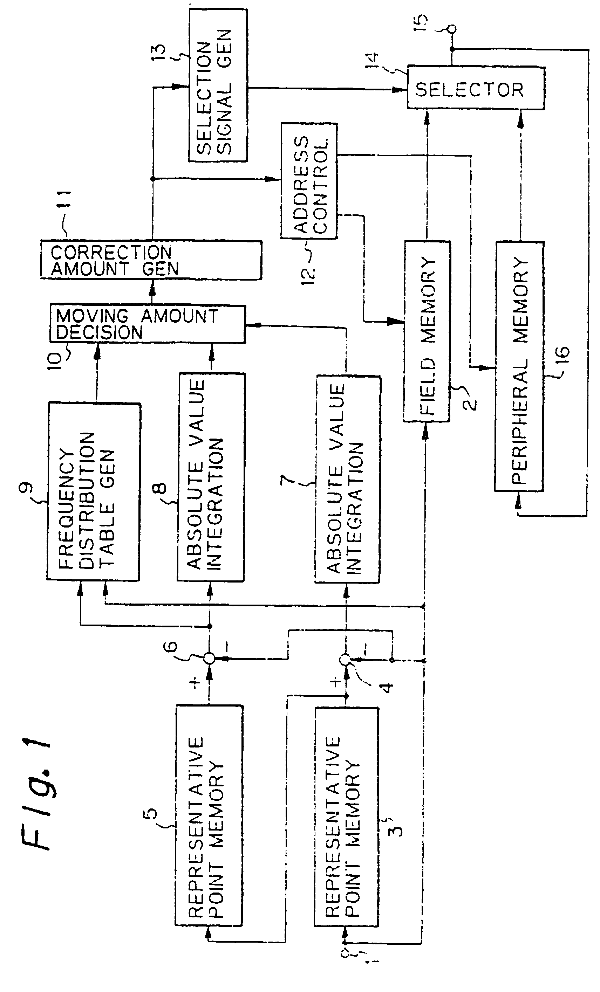

Hereunder, one embodiment of this invention will be described referring to the drawings. In this embodiment, by paying attention to the fact that since hand-caused vibration is a movement of a video camera, a whole picture moves, while the movement of an object means that a certain portion of a picture moves, that is, there is a still portion in the picture, the distinction of both can be performed. In Fig. 1, 1 is an input terminal for digital video data. The video data is not only the one taken by a CCD of the video camera, for example, but also a sequence of the order of interlaced scanning.

The input video data is supplied to a field memory 2 and a representative point memory 3. Data which has been subjected, to the correction of hand-caused vibration by a correction signal mentioned later is read out at an output of the field memory 2. When the processing is done for every frame, a frame memory is used in place of the field memory 2. The output of the representative point memory 3 is given to a subtracter 4 and a representative point memory 5. The output of the representative point memory 5 is supplied to a subtracter 6. The input video data is given to the subtracters 4 and 6. The representative point memory 3 stores data of a representative point lying before one field, while the representative point memory 5 stores data of a representative point lying before two fields (i.e., one frame).

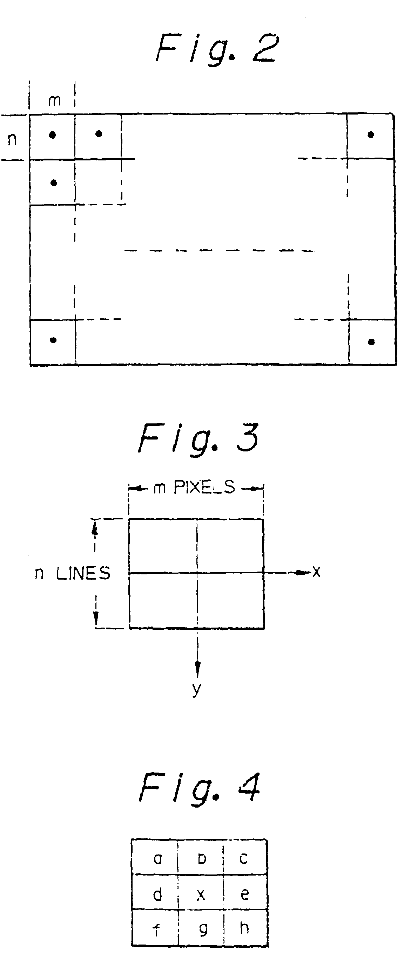

As shown in Fig. 2, a picture of one field is segmented into blocks of m picture elements × n lines, and a central picture element of each block is regarded as a representative point. The representative points are distributed evenly on the picture. The subtracter 4 detects respective differences (that is, inter-field differences) between respective data of m × n picture elements of a certain block in the present field and data of a representative point of a block at the same position in a previous field. The inter-field difference is supplied to an absolute value integration circuit 7. Similarly, the subtracter 6 detects a frame difference between a block of the present field and a representative point lying before two fields. The frame difference is fed to an absolute value integration circuit 8 and a frequency distribution table generator 9.

The detection of a moving vector is made using the frame difference at the absolute value integration circuit 8. The inter-field movement provided by the absolute value integration circuit 7 from the inter-field difference is used as auxiliary means. Specifically, there is a feature that the inter-field difference provides good accuracy in terms of time but bad one in terms of position, while the inter-frame difference provides bad accuracy in terms of time but good one in terms of position. As a result, when a moving vector is detected from the frame difference, detection accuracy can be improved using the inter-field difference in combination.

As shown in Fig. 3, the search area of movement is handled as the same as the block size. m × n differences between a representative point lying before two fields and picture element data within a block of the present field are produced at the subtracter 6 for every block. In the absolute value integration circuit 8, the absolute value of a frame difference of each position within the block is accumulated over one frame period, distribution of accumulated frame difference data of m × n is formed, and a minimum value in the distribution is detected as a moving vector. The detection of the moving vector is the same as the conventional one.

To the frequency distribution table generator 9, a frame difference from the subtracter 6 and the input video data are supplied. In the frequency distribution table generator 9, as shown in Fig. 4, a memory having addresses corresponding to eight peripheral picture elements a, b, c, d, e, f, g, and h of a picture element x, which coincides with the center of the block of Fig. 3, is provided. Among these picture elements, the frequency of positions (addresses of the memory) having an inclination in terms of space is updated when each frame difference becomes zero. For example, when the frame difference is almost zero and when an absolute value of a difference between a value of the picture element x and a value of the picture element d is greater than a threshold value, the address of the memory corresponding to the position of d is brought to +1. This processing for every block is accumulated over a whole picture to provide a frequency distribution table. When the inclination in terms of space lies in the horizontal direction (between the picture element x and the picture element e or between the picture element (x and the picture element d), for example, a frame difference occurs without fail as a result of horizontal movement. Consequently, when the above-mentioned conditions are met, it means that its block is still in the direction.

To a moving amount decision circuit 10, a moving vector detected at the absolute value integration circuit 8 and the output of the frequency distribution table generator 9 are supplied. The moving amount decision circuit 10 verifies whether the moving vector can be employed as a hand-caused vibration vector. Specifically, it decides that the moving vector is generated from the movement of the whole picture when the frequency of positions corresponding to the moving picture, that is, the portion of still blocks is less than a threshold value for decision. Simultaneously, it decides that the moving vector is the hand-caused vector. Otherwise, it decides that there are many still blocks in the picture and that the moving vector is generated from the movement of an object in the picture. For example, when thus detected moving vector is in the upward or vertical direction, the frequency of the position of the picture element b is examined. If this frequency is larger than a threshold level, it is understood that there are many still portions in the picture and recognized that the moving vector is not the hand-caused vibration vector.

The supply of the inter-field moving vector from the absolute value integration circuit 7 to the moving amount decision circuit 10 is to check the stability of a detected moving vector and improve the accuracy. The output (hand-caused vibration vector) of the moving amount decision circuit 10 is given to a correction amount generator 11. The hand-caused vector is detected from the inter-frame movement but not the same as the correction amount for hand-caused vibration. For instance, when hand-caused vibration in the same direction takes place in consecutive three frame periods and the second and third frame periods, a hand-caused vibration vector V1 between the first and next frames is detected, and a hand-caused vibration vector V2 between the second and third frames is detected. Although a correction amount for the second frame may be V1, a correction amount for the third frame must be (V1 + V2). The correction amount generator 11 generates a correction amount provided by the integration of the hand-caused vector. Further, as in this embodiment, when hand-caused vibration correction is made at the unit of field, a moving vector is brought to 1/2 to correspond to the time difference of the field and frame for the conversion of an inter-frame moving amount into an inter-field one.

A hand-caused vibration correction signal from the correction amount generator 11 is supplied to an address control circuit 12 and a selection signal generator 13. The address control circuit 12 generates address signals for the field memory 2 and a peripheral memory 16. A picture of one field is written into the field memory 2, and its read-out address is controlled depending on a correction amount. Therefore, video data provided by moving the input video data of one field depending on the correction amount is obtained from the field memory 2. The output of the field memory 2 is supplied to a selector 14. The output of the selector 14 is taken out at an output terminal 15 and to the peripheral memory 16. Peripheral data which is the output of the peripheral memory 16 is supplied to the selector 14. The selector 14 selects video data, which has been subjected to the correction of hand-caused vibration, from the field memory 2 and peripheral data stored in the peripheral memory 16 in response to a selection signal from the selection signal generator 13.

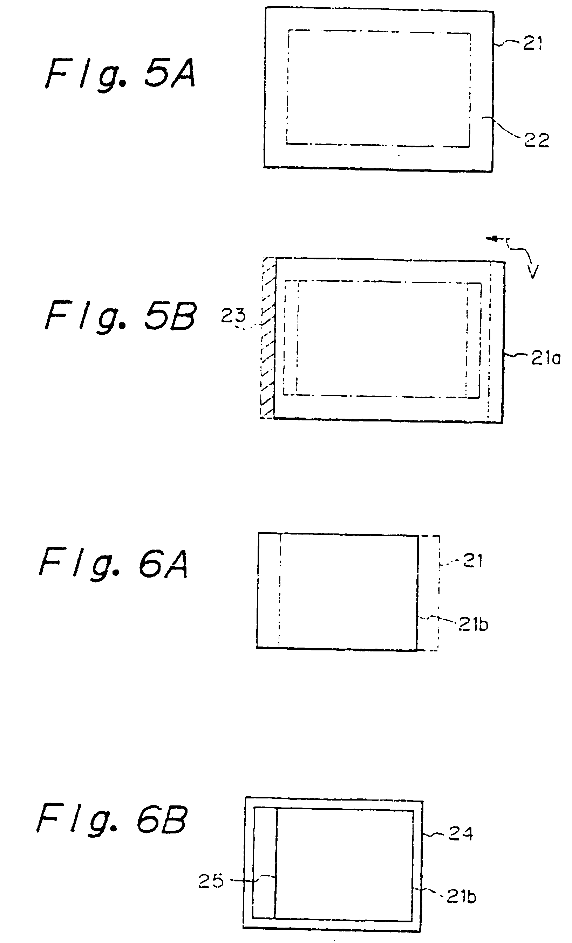

As shown in Fig. 5, a peripheral portion 22 (area outside of a one-dot and dash line) of one field picture (its picture frame is indicated at 21) taken into the field memory 2 is stored in the peripheral memory 16. The width of the peripheral portion 22 is set in consideration of the range of correction of hand-caused vibration, for instance, set at the width of the extent of 10 to 20 percent. In Fig. 5B, when a picture which should lie in a position of Fig. 5A, moves due to hand-caused vibration in the right-handed direction with respect to the drawing, for example, as shown by the picture frame 21, a whole picture is corrected to a position indicated at a broken line by a hand-caused vibration correcting amount. In such a case, because of its absence in a taken picture from the beginning, a picture portion 23 indicated by an oblique line on the left-handed side of the moved picture is dropped. The dropped portion 23 is replaced by a picture at a corresponding position stored in the peripheral memory 16. This replacement is carried out by the address control of the address control circuit 12 and the switching operation of the selector 14. Also, peripheral picture data other than the dropped portion 23 in the taken video data is written into the peripheral memory 16 to update the content of the memory 16.

In this invention, the correction of hand-caused vibration of the output of a video camera may be carried out on a real-time basis. Further, such correction of the hand-caused vibration may be applied to the output of a VTR. In correcting the output of the video camera on a real-time basis, it is desirable to display a marker indicative of the presence of hand-caused vibration on a picture of a view finder.

As shown in Fig. 6, a picture frame indicated by a broken line is an actually taken picture, and it is assumed that this picture has been corrected by the above-stated correction of the hand-caused vibration as shown at a picture 21b indicated by a solid line. In this case, as shown in Fig. 6B, a marker 25 indicated by a longitudinal line is displayed at a position corresponding to an edge of the picture frame 21 by which a picture is actually taken. Looking at this marker 25, the person who is taking the picture understands the direction and amount of hand-caused vibration or the direction and amount of hand-causedvibration correction and moves a view finder towards the direction correcting the hand-caused vibration. Since a feedback is performed based on the eyesight of a video camera operator, in addition to the above-mentioned correction of the hand-caused vibration, the situation where the range of the hand-caused vibration exceeds the correction range can be prevented beforehand. If the display of the hand-caused vibration on the view finder is not done, a picture may move abruptly at a certain time point when such a correction of the hand-caused vibration cannot be done. For the marker 25, an arrow, etc., may be employed without being limited to the longitudinal line.

Since this invention replaces a dropped portion, by correction of hand-caused vibration using data representing a peripheral portion stored in the peripheral memory, no deterioration such as picture blur takes place in constrast the picture enlargement. In this invention, discontinuity occurs at a part of the peripheral picture in terms of time. However, deterioration in terms of eyesight due to this discontinuity does not appear remarkably because that is the peripheral portion.

Having described a specific preferred embodiment of the present invention with reference to the accompanying drawings, it is to be understood that the invention is not limited to that precise embodiment, and that various changes and modifications may be effected therein by one skilled in the art without departing from the scope of the invention as defined in the appended claims.

## Claims

1. A video signal processing apparatus for processing a video signal generated by an image sensing device in a video camera, comprising:
delay means (2) for delaying said video signal;
means (3-8) operative on the video signal for generating a motion vector signal representing a motion amount and motion direction between consecutive frames of the video signal;
means (9,10) for judging whether the motion vector could represent an undesired hand-caused vibration which has displaced the image sensing means relative to a previous position thereof in which a first effective picture area was imaged; and
correcting means (2,11-14,16) for performing a correction operation in accordance with the magnitude and direction of the motion vector when the motion vector is judged to represent an undesired hand-caused vibration;
characterised in that:
the correcting means (2,11-14,16) is adapted to perform said correction operation on the video signal whereby to correct said video signal in accordance with the magnitude and direction of the motion vector when the motion vector is judged to represent an undesired hand-caused vibration;
memory means (16) is provided for storing portions of the corrected video signal which correspond to the periphery of said first effective picture area; and
the correcting means comprises selecting means (12) responsive to the result of the judgement made by the judging means for outputting a corrected video signal corresponding to said first effective picture area by selectively outputting either the video signal held in the delay means and delayed in dependence upon said motion vector (2) or corrected video signal portions stored in the memory means (16);
wherein the selecting means is adapted, in the case where one or more regions of the periphery of said first effective picture area have been dropped from the video signal due to the motion and the motion vector is judged to represent undesired hand-caused vibration, to select for output the or those portions of the corrected video signal stored in the memory means (16) which correspond to said one or more regions of the periphery of the first effective picture area.

2. A video signal processing apparatus according to claim 1, wherein said motion vector generating means includes:
means (3,5) for storing, for each of a plurality of multi-pixel blocks making up the image represented by a frame of the video signal, representative pixel data;
subtracting means (6) for subtracting, from pixel data for each pixel of a block making up the image represented by a frame of the video signal, stored representative pixel data of the corresponding block in the preceding frame, whereby to generate frame difference data; and
means (8) for accumulating, for each block, the frame difference data generated by the subtracting means.

3. A video signal processing apparatus according to claim 1 wherein said judging means (9,10) comprises:
subtracting means (6) for detecting the difference between pixel data for each pixel of a block making up the image represented by a frame of the video signal and the representative pixel data stored by the storing means (5) in respect of the corresponding block in the preceding frame of the video signal; and
distribution table generating means (9), responsive to the video signal and to the output of the detecting means, for generating a distribution table indicating the frequency and orientation of edges in the image represented by said frame of the video signal, said distribution table generating means comprising a memory having a plurality of addresses corresponding to different spatial positions of pixels in a block of the image represented by the video signal.

4. A video signal processing apparatus according to claim 3, wherein said judging means is adapted to access an address in the memory of the distribution table generating means determined by the motion direction of the motion vector generated by the motion vector generating means (3-8), and to compare frequency data stored at said address against a threshold in order to determine whether or not said motion vector corresponds to motion of the image sensing device.

5. A video signal processing apparatus according to claim 1, wherein said video camera includes a viewfinder for display of an image corresponding to said first effective picture area, based on said processed video signal, and of a marker (25) marking the boundaries of said one or more regions of the periphery of the first effective picture area.

## Patentansprüche

1. Videosignalverarbeitungsvorrichtung zur Verarbeitung eines von einer Bildsensoreinrichtung in einer Videokamera erzeugten Videosignals
mit einer Verzögerungseinrichtung (2) zur Verzögerung des Videosignals,
mit einer auf das Videosignal einwirkenden Bewegungsvektor-Generatoreinrichtung (3-8) zur Erzeugung eines Bewegungsvektors, der Größe und Richtung einer Bewegung zwischen aufeinanderfolgenden Vollbildern des Videosignals repräsentiert,
mit einer Entscheidungseinrichtung (9, 10) zur Entscheidung, ob der Bewegungsvektor eine unabsichtliche durch die Hand verursachte Vibration (Verwackeln) repräsentiert, durch die die Bildsensoreinrichtung gegenüber ihrer früheren Position, in der eine erste effektive Bildfläche abgebildet wurde, verschoben wurde,
sowie mit einer Korrektureinrichtung (2, 11-14, 16) durch Durchführung einer Korrektur nach Maßgabe der Größe und Richtung des Bewegungsvektors, wenn festgestellt wird, daß der Bewegungsvektor ein unabsichtliches Verwackeln repräsentiert,
**dadurch gekennzeichnet,**
daß die Korrektureinrichtung (2, 11-14, 16) so ausgebildet ist, daß sie die Korrektur des Videosignals durchführt, durch die das Videosignal entsprechend der Größe und Richtung des Bewegungsvektors korrigiert wird, wenn festgestellt wird, daß der Bewegungsvektor ein unabsichtliches Verwackeln repräsentiert,
daß eine Speichereinrichtung (16) zur Speicherung von Teilen des korrigierten Videosignals vorgesehen ist, die der Peripherie der ersten effektiven Bildfläche entsprechen, und
daß die Korrektureinrichtung eine Auswahleinrichtung (12) aufweist, die in Abhängigkeit von dem Ergebnis der von der Entscheidungseinrichtung durchgeführten Entscheidung ein korrigiertes Videosignal ausgibt, das der ersten effektiven Bildfläche entspricht, indem wahlweise entweder das in der Verzögerungseinrichtung (2) gehaltene und nach Maßgabe des Bewegungsvektors verzögerte Videosignal oder in der Speichereinrichtung (16) gespeicherte korrigierte Videosignalteile ausgegeben werden,
wobei die Auswahleinrichtung so ausgebildet ist, daß sie für den Fall, daß eine oder mehrere Regionen der Peripherie der ersten effektiven Bildfläche aus dem Videosignal ausgefallen sind und festgestellt wird, daß der Bewegungsvektor ein unabsichtliches Verwackeln repräsentiert, für die Ausgabe den Teil oder die Teile des in der Speichereinrichtung (16) gespeicherten Videosignals auswählt, die der einen oder den mehreren Regionen der Peripherie der ersten effektiven Bildfläche entsprechen.

2. Videosignalverarbeitungsgerät nach Anspruch 1, bei dem die Bewegungsvektor-Generatoreinrichtung aufweist:
eine Einrichtung (3, 4) zur Speicherung von repräsentativen Pixeldaten für jeden aus einer Mehrzahl von Mehrpixelblöcken, die das von einem Vollbild des Videosignals repräsentierte Bild aufbauen,
eine Subtrahiereinrichtung (6) zum Subtrahieren von gespeicherten repräsentativen Pixeldaten des korrespondierenden Block in dem vorhergehenden Vollbild von Pixeldaten für jedes Pixel eines Blocks, der das von einem Vollbild des Videosignals repräsentierte Bild aufbaut, um Vollbilddifferenzdaten zu erzeugen, und
eine Einrichtung (8) zum Akkumulieren der von der Subtrahiereinrichtung erzeugten Vollbilddifferenzdaten für jeden Block.

3. Videosignalverarbeitungsgerät nach Anspruch 1, bei dem die Entscheidungseinrichtung (9, 10) aufweist:
eine Subtrahiereinrichtung (6) zum Detektieren der Differenz zwischen Pixeldaten für jedes Pixel eines Blocks, der das von einem Vollbild des Videosignals repräsentierte Bild aufbaut, und den von der Speichereinrichtung (5) gespeicherten repräsentativen Pixeldaten bezüglich des korrespondierenden Blocks in dem vorhergehenden Vollbild des Videosignals und
eine Verteilungstabellen-Generatoreinrichtung (9), die auf das Videosignal und das Ausgangssignal der Subtrahiereinrichtung anspricht, um eine Verteilungstabelle zu erzeugen, die die Frequenz und die Orientierung von Kanten in dem von dem Vollbild des Videosignals repräsentierten Bild kennzeichnet, wobei diese Verteilungstabellen-Generatoreinrichtung einen Speicher aufweist, der eine Mehrzahl von Adressen besitzt, die unterschiedlichen räumlichen Positionen von Pixeln in einem Block des von dem Videosignal repräsentierten Bildes entsprechen.

4. Videosignalverarbeitungsgerät nach Anspruch 3, bei dem die Entscheidungseinrichtung so ausgebildet ist, daß sie auf eine Adresse in dem Speicher der Verteilungstabellen-Generatoreinrichtung zugreift, die durch die Bewegungsrichtung des von der Bewegungsvektor-Generatoreinrichtung (3-8) erzeugten Bewegungsvektors bestimmt wird, und daß sie die an dieser Adresse gespeicherten Frequenzdaten mit einem Schwellwert vergleicht, um festzustellen, ob der Bewegungsvektor einer Bewegung der Bildsensoreinrichtung entspricht.

5. Videosignalverarbeitungsgerät nach Anspruch 1, bei dem die Videokamera einen Sucher enthält für die Anzeige eines der genannten ersten effektiven Bildfläche entsprechenden Bildes auf der Basis des verarbeiteten Videosignals sowie zur Anzeige einer Markierung (25), die die Grenzen der genannten einen oder mehreren Regionen der Peripherie der ersten effektiven Bildfläche markiert.

## Revendications

1. Appareil de traitement de signal vidéo, servant à traiter un signal vidéo produit par un dispositif de détection d'image dans une caméra vidéo, comprenant :
un moyen retardateur (2) servant à retarder ledit signal vidéo ;
un moyen (3-8) agissant sur le signal vidéo afin de produire un signal vecteur de déplacement qui représente une amplitude de déplacement et une direction de déplacement entre des images complètes consécutives du signal vidéo ;
un moyen (9, 10) servant à déterminer si le vecteur de déplacement pourrait ou non représenter des vibrations non voulues d'origine manuelle qui ont déplacé le dispositif de détection d'image par rapport à une position précédente de celui-ci, dans laquelle une première zone d'image de vue effective a donné lieu à la formation d'une image ; et
un moyen de correction (2, 11-14, 16) servant à effectuer une opération de correction en fonction de l'amplitude et de la direction du vecteur de déplacement lorsqu'il a été déterminé que le vecteur de déplacement représentait des vibrations non voulues d'origine manuelle ;
caractérisé en ce que :
le moyen de correction (2, 11-14, 16) est conçu pour effectuer ladite opération de correction sur le signal vidéo de façon à corriger ledit signal vidéo en fonction de l'amplitude et de la direction du vecteur de déplacement lorsque le vecteur de déplacement a été considéré comme représentant des vibrations non voulues d'origine manuelle ;
un moyen de mémorisation (16) est prévu pour stocker des parties du signal vidéo corrigé qui correspondent à la périphérie de ladite première zone d'image de vue effective ; et
le moyen de correction comprend un moyen de sélection (12) qui répond au résultat de la détermination effectuée par le moyen de détermination de façon à délivrer un signal vidéo corrigé correspondant à ladite première zone d'image de vue effective en délivrant sélectivement le signal vidéo maintenu dans le moyen retardateur (2) et retardé en fonction dudit vecteur de déplacement ou bien des parties du signal vidéo corrigé qui sont stockées dans le moyen de mémorisation (16) ;
où le moyen de sélection est conçu, dans le cas où une ou plusieurs régions de la périphérie de ladite première zone d'image de vue effective ont été abandonnées du signal vidéo du fait du déplacement et où le vecteur de déplacement a été déterminé comme représentant des vibrations non voulues d'origine manuelle, pour sélectionner, en vue de leur délivrance, les parties du signal vidéo corrigé stockées dans le moyen de mémorisation (16) ou celles de ces parties qui correspondent à ladite ou auxdites régions de la périphérie de la première zone d'image de vue effective.

2. Appareil de traitement de signal vidéo selon la revendication 1, où ledit moyen de production de vecteur de déplacement comporte :
un moyen (3, 5) servant à stocker, pour chaque bloc d'une pluralité de blocs à plusieurs pixels constituant l'image représentée par une image complète du signal vidéo, des données de pixels représentatives ;
un moyen de soustraction (6) servant à soustraire, des données de pixels relatives à chaque pixel d'un bloc constituant l'image représentée par une image complète du signal vidéo, les données de pixels représentatives stockées du bloc correspondant de l'image complète précédente, de façon à produire des données de différence entre images complètes ; et
un moyen (8) servant à accumuler, pour chaque bloc, les données de différence d'images complètes produites par le moyen de soustraction.

3. Appareil de traitement de signal vidéo selon la revendication 1, où ledit moyen de détermination (9, 10) comprend :
un moyen de soustraction (6) servant à déterminer la différence entre les données de pixels relatives à chaque pixel d'un bloc constituant l'image représentée par une image complète du signal vidéo et les données de pixels représentatives stockées par le moyen de stockage (5) relativement au bloc correspondant de l'image complète précédente du signal vidéo ; et
un moyen (9) de production de table de distribution, qui répond au signal vidéo et au signal de sortie du moyen de détection en produisant une table de distribution indiquant la fréquence et l'orientation de bords présents dans l'image représentée par ladite image complète du signal vidéo, ledit moyen de production de table de distribution comprenant une mémoire qui possède une pluralité d'adresses correspondant à des positions spatiales différentes de pixels d'un bloc de l'image représenté par le signal vidéo.

4. Appareil de traitement de signal vidéo selon la revendication 3, où ledit moyen de détermination est conçu pour faire accès à une adresse de la mémoire du moyen de production de table de distribution, déterminée par la direction de déplacement du vecteur de déplacement produit par le moyen (3-8) de production de vecteur de déplacement, et pour comparer les données de fréquence stockées à ladite adresse avec un seuil afin de déterminer si ledit vecteur de déplacement correspond ou non à un déplacement du moyen de détection d'image.

5. Appareil de traitement de signal vidéo selon la revendication 1, où ladite caméra vidéo comporte un viseur servant à afficher une image correspondant à ladite première zone d'image de vue effective, sur la base dudit signal vidéo traité, et un repère (25) marquant les frontières de ladite ou desdites régions de la périphérie de la première zone d'image de vue effective.
